# EUROPÄISCHE PATENTANMELDUNG

(11) **EP 1 288 165 A1**
(43) Veröffentlichungstag der Anmeldung: **05.03.2003**
(21) Anmeldenummer: 02016628.6
(22) Anmeldetag: 25.07.2002
(51) Int. Cl.: C02F 1/28, C02F 1/00

(54) **Vorrichtung zum Reinigen von Flüssigkeiten**

(30) Priorität: 24.08.2001 DE 10140652
(71) Anmelder: Plocher, Roland, 88709 Meersburg (DE)
(72) Erfinder: Die Erfindernennung liegt noch nicht vor
(74) Vertreter: Weiss, Peter, Dr.

(57) **Zusammenfassung**

Bei einer Vorrichtung zum Behandeln, Reinigen, Filtern, zur Schadstoffreduktion und Sauerstoffanreicherung von Flüssigkeiten, insbesondere Wasser mit einem Behälter (1), welchem zumindest ein Einlass (4) und zumindest ein Auslass (10) zugeordnet sein soll, soll der Behälter (1) in mehrere durchströmbare Kammern (6.1 bis 6.3) unterteilt sein. Die Kammern sind vorteilheft koaxial zueinander angeordnet.

## Beschreibung

Die vorliegende Erfindung betrifft eine Vorrichtung zum Reinigen, Behandeln, Filtern, zur Schadstoffreduktion und Sauerstoffanreicherung von Flüssigkeiten, insbesondere von Wasser mit einem Behälter, welchem zumindest ein Einlass und zumindest ein Auslass zugeordnet ist.

Derartige Vorrichtungen sind beispielsweise als Kohlefilter bekannt, wie sie in einem herkömmlichen Kreislauf beispielsweise eines Schwimmbades oder dgl. eingesetzt werden können. Sie dienen u.a. auch um herkömmliches Brauchwasser von unangenehmen und unerwünschten Gerüchen und Keimen zu befreien.

Nachteilig ist jedoch, dass bisherige und herkömmliche Vorrichtungen nicht geeignet sind, beispielsweise verschmutzte Gewässer, insbesondere verschmutztes Wasser eines Schwimmbades derart wieder aufzubereiten, dass dieses keimfrei, sauber und frei von Verunreinigungen ist.

Der vorliegenden Erfindung liegt die Aufgabe zugrunde eine Vorrichtung der eingangs genannten Art zu schaffen, welche die genannten Nachteile beseitigt und bei welcher Flüssigkeit, insbesondere Wasser mit Sauerstoff angereichert werden soll. Zudem sollen Verunreinigungen und Schwermetalle absorbiert und Keime reduziert werden. Ferner soll die Lebensdauer in einer derartigen Vorrichtung erheblich erhöht werden.

Zur Lösung dieser Aufgabe führt, dass der Behälter in mehrere durchströmbare Kammern unterteilt ist.

Bei der vorliegenden Erfindung wird eine Vorrichtung geschaffen, bei welcher einzelne Kammern koaxial zueinander angeordnet sind, die einzeln hintereinander von einer zu reinigenden Flüssigkeit durchströmbar sind. Dabei werden die einzelnen Kammern, die koaxial von innen nach aussen angeordnet sind, von innen nach aussen hintereinander durchströmt. Die einzelnen Kammern sind mit Stützkies, Basalt, Zeolith, Evazit, Aktivkohle etc. in unterschiedlichen Körnungen und Zusammensetzungen gefüllt.

Im bevorzugten Ausführungsbeispiel werden die koaxialen aussenliegenden Kammern querschnittlich, grösser als die inneren Kammern ausgebildet, so dass eine Durchströmgeschwindigkeit von innen nach aussen abnimmt. Hierdurch hat die den Behälter durchströmende Flüssigkeit eine grössere benetzbare Oberfläche, so dass die Reinigungswirkung, die Reduktion von Keimen und die Absorption von Schwermetallen wesentlich verbessert ist.

Ferner ist in der dritten Kammer eine äussere Mantelfläche flüssigkeitdurchlässig, vorzugsweise als Lochblech ausgebildet, so dass die in die dritte Kammer eintretende Flüssigkeit diese teilweise durchströmt und teilweise durch die Mantelfläche hindurchdringt und aussen am Lochblech herabrieselt, wobei zusätzlich eine Sauerstoffanreicherung erfolgt.

Die erfindungsgemässe Vorrichtung kann beispielsweise in einen Brauchwasserkreislauf eines Schwimmbades eingesetzt werden. Die dort entstehenden Keime im Brauchwasser werden abgebaut bzw. reduziert, die Absorption von Schwermetallen optimiert, so dass gleichzeitig durch die optimale Reinigungswirkung die Chlorkonzentration des Wassers bis Null herabgesetzt werden kann, was zur Wasserqualität erheblich beiträgt. Es kann sogar auf eine Chlorierung oder eine Ozonisierung oder sonstige übliche Behandlung von Brauchwasser verzichtet werden, um eine noch bessere Reinigungswirkung als bei herkömmlichen Reinigungsmethoden zu erzielen.

Hinzu ist es ebenfalls von Vorteil, wenn die Materialien, die in den einzelnen Kammern angeordnet sind, wie beispielsweise Basalt, Zeolith, Stützkies, Aktivkohle bestrahlt, insbesondere behandelt sind. Hierdurch kann deren Effektivität und Wirkungsweise erheblich verbessert werden. Dies soll ebenfalls im Rahmen der vorliegenden Erfindung liegen.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in

Figur 1 einen schematisch dargestellten Querschnitt durch eine erfindungsgemässe Vorrichtung zum Reinigen, Behandeln, Filtern, zur Schadstoffreduktion und Sauerstoffanreicherung von Flüssigkeit, insbesondere von Wasser;
Figur 2 eine schematisch dargestellte Draufsicht auf die Vorrichtung gemäss Figur 1;

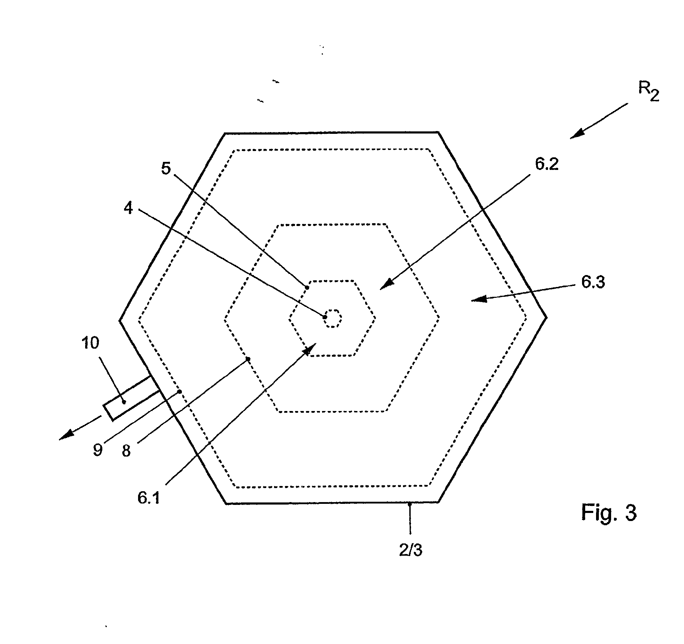

Figur 3 eine Draufsicht auf ein weiteres Ausführungsbeispiel der Vorrichtung gemäss Figur 1.

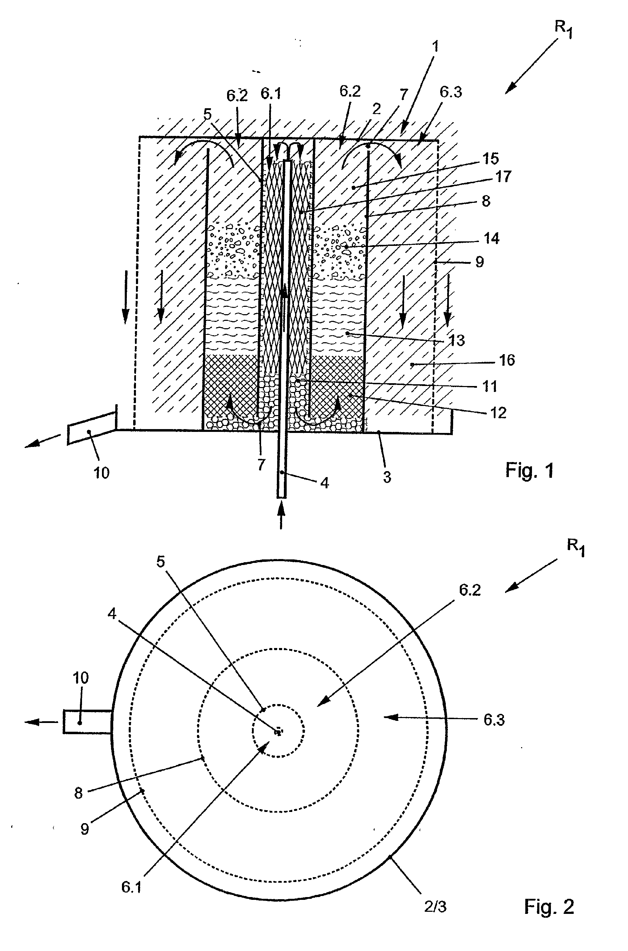

Gemäss Figur 1 weist eine erfindungsgemässe Vorrichtung R₁ zum Reinigen, Behandeln, Filtern, zur Schadstoffreduktion und zur Sauerstoffanreicherung einen Behälter 1 auf, welcher aus einem Deckelelement 2 mit einem Bodenelement 3 gebildet ist. In etwa mittig mündet in das Bodenelement 3 ein Einlass 4 ein, welcher nahezu innen an das Deckelelement 2 heranragt.

Durch den Einlass 4, der jedoch auch im Bereich des Deckelelementes 2 angeordnet sein kann, wird die zu reinigende Flüssigkeit bzw. das zu reinigende Wasser in den Behälter 1 eingepumpt. Koaxial um den Einlass 4 ist zwischen Deckelelement 2 und Bodenelement 3 über eine Wand 5 eine erste Kammer 6.1 gebildet, die koaxial den Einlass 4 umfängt. Stirnseitig nahe des Bodenelementes 3 ist eine Verbindung 7 bspw. als Öffnung zwischen der Wand 5 und dem Bodenelement 3 gebildet, wobei ein weiteres Wandelement 8 koaxial und beabstandet die Wand 5 umfängt, so dass eine zweite Kammer 6.2 gebildet ist. Die Kammer 6.2 ist, wie es auch aus Figur 2 hervorgeht, querschnittlich kreisringartig ausgebildet und umfängt vollständig die Wand 5 bzw. die erste Kammer 6.1.

Das Wandelement 8 ist vorzugsweise mit dem Bodenelement 3 flüssigkeitsundurchlässig verbunden, wobei stirnseitig zwischen Deckelelement 2 und Wandelement 8 ebenfalls eine flüssigkeitsdurchlässige Verbindung 7 gebildet ist.

Das Wandelement 8 wird von einer Mantelfläche 9 umfangen, welche die Flüssigkeit durchlässt. Stirnseitig an die Mantelfläche 9 schliessen jeweils Deckelelement 2 und Bodenelement 3 an, wobei das Bodenelement 3 die Mantelfläche 9 schalenartig überlappt bzw. übergreift und gleichzeitig als Auffangbehälter für die gereinigte Flüssigkeit dient, wobei dem Bodenelement 3 ein Auslass 10 zugeordnet ist.

Die zwischen der Mantelfläche 9 und dem Wandelement 8 gebildete Kammer 6.3, welche querschnittlich ebenfalls kreisringartig ausgebildet ist, lässt Flüssigkeit nach aussen durch die Mantelfläche 9 hindurch. Diese rieselt dann am Lochblech entlang nach unten in das Bodenelement 3.

Damit beim Reinigen, Behandeln, Filtern, bei der Reduktion von Schadstoffen gleichzeitig eine Sauerstoffanreicherung von Flüssigkeiten insbesondere von Wasser auch zur Verbesserung der Hygiene, zur Schwefelreduktion, zur Verminderung von Keimbildung optimiert ist, wird die erste Kammer 6.1 mit einem Filterelement 17, insbesondere als Filterwatte, ggf. ausgebildet als Filterpatrone eingesetzt und ein darunterliegender Bereich mit Stützkies 11 befüllt. Das über den Einlass 4 einströmende zu reinigende Wasser gelangt in die erste Kammer 6.1 und durchströmt vollständig das Filterelement 17 und dann den Stützkies 11. Das Filterelement ist vorzugsweise auswaschbar und/oder als austauschbare Filterpatrone oder als austauschbare Filterwatte in die Kammer 6.1 eingesetzt. Anschliessend gelangt das Wasser im stirnseitigen Bereich der Wand 5, nahe des Bodenelementes 3 in die zweite Kammer 6.2, und muss dort den eingebrachten Basalt 12, anschliessend den Evazit 13 und den darüberliegenden Kies 14 und Zeolith 15 durchströmen. Im Anschluss an die zweite Kammer 6.2 strömt von der zweiten in die dritte Kammer 6.3 im Bereich der Verbindung 7 stirnseitig zwischen Wandelement 8 und Deckelelement 2 das Wasser in die dritte Kammer 6.3 ein, welche vollständig mit Zeolith 16 befüllt ist. Ein Teil der Flüssigkeit bzw. des Wassers tritt durch die wasserdurchlässige Mantelfläche 9 nach aussen und rieselt entlang dieser Mantelfläche 9 in das Bodenelement 3, wird dort aufgefangen und über den Auslass 10 abgeleitet. Der andere Teil des Wasserstromes durchströmt die Kammer 6.3 vollständig und wird am Bodenelement 3 aufgefangen.

Auf diese Weise lässt sich beispielsweise verunreinigtes Wasser eines Schwimmbades, welches von Keimen durchsetzt ist, nahezu vollständig keimfrei behandeln bzw. reinigen. Hierdurch kann beispielsweise bei der Wasseraufbereitung von Schwimmbädern auf Chlor oder andere Behandlungen von Wasser mit bspw. Ozon oder UKV-Licht verzichtet werden, was zur Wasserqualität erheblich beiträgt.

Wichtig bei der vorliegenden Erfindung ist auch, dass in unterschiedlichen Bereichen in den einzelnen Kammern 6.1 bis 6.3 Stützkies, Basalt, Evazit und Zeolith in unterschiedlichen Körnungen und Korngrössen angeordnet sein können. Dies soll ebenfalls im Rahmen der vorliegenden Erfindung liegen. Auch soll im Rahmen der vorliegenden Erfindung liegen, wie es bei einer Vorrichtung R₂ aufgezeigt ist, dass querschnittlich die einzelnen Kammern 6.1 bis 6.3 viereckartig, vorzugsweise sechseckartig, wabenartig, vieleckartig und/oder sogar rechteckartig ausgebildet sein können. Hierauf sei die Erfindung nicht beschränkt.

### Positionszahlenliste

| | | | | | |
|---|---|---|---|---|---|
| 1 | Behälter | 34 | | 67 | |
| 2 | Deckelement | 35 | | 68 | |
| 3 | Bodenelement | 36 | | 69 | |
| 4 | Einlass | 37 | | 70 | |
| 5 | Wand | 38 | | 71 | |
| 6 | Kammer | 39 | | 72 | |
| 7 | Verbindung | 40 | | 73 | |
| 8 | Wandelement | 41 | | 74 | |
| 9 | Mantelfläche | 42 | | 75 | |
| 10 | Auslass | 43 | | 76 | |
| 11 | Stützkies | 44 | | 77 | |
| 12 | Basalt | 45 | | 78 | |
| 13 | Evazit | 46 | | 79 | |
| 14 | Stützkies | 47 | | | |
| 15 | Zeolith | 48 | | | |
| 16 | Zeolith | 49 | | R₁ | Vorrichtung |
| 17 | Filterelement | 50 | | R₂ | Vorrichtung |
| 18 | | 51 | | | |
| 19 | | 52 | | | |
| 20 | | 53 | | | |
| 21 | | 54 | | | |
| 22 | | 55 | | | |
| 23 | | 56 | | | |
| 24 | | 57 | | | |
| 25 | | 58 | | | |
| 26 | | 59 | | | |
| 27 | | 60 | | | |
| 28 | | 61 | | | |
| 29 | | 62 | | | |
| 30 | | 63 | | | |
| 31 | | 64 | | | |
| 32 | | 65 | | | |
| 33 | | 66 | | | |

## Patentansprüche

1. Vorrichtung zum Behandeln, Reinigen, Filtern, zur Schadstoffreduktion und Sauerstoffanreicherung von Flüssigkeiten, insbesondere Wasser mit einem Behälter (1), welchem zumindest ein Einlass (4) und zumindest ein Auslass (10) zugeordnet ist,
**dadurch gekennzeichnet,**
**dass** der Behälter (1) in mehrere durchströmbare Kammern (6.1 bis 6.3) unterteilt ist.

2. Vorrichtung nach Anspruch 1, **dadurch gekennzeichnet, dass** Flüssigkeit die einzelnen Kammern (6.1 bis 6.3) nacheinander durchströmt.

3. Vorrichtung nach Anspruch 1 oder 2, **dadurch gekennzeichnet, dass** die einzelnen Kammern (6.1 bis 6.3) koaxial zueinander angeordnet sind.

4. Vorrichtung nach wenigstens einem der Ansprüche 1 bis 3, **dadurch gekennzeichnet, dass** der Behälter (1) ein Bodenelement (3) und ein Deckelelement (2) aufweist, wobei dazwischen die einzelnen Kammern (6.1 bis 6.3) koaxial angeordnet sind.

5. Vorrichtung nach Anspruch 4, **dadurch gekennzeichnet, dass** zentrisch in das Bodenelement (3) der Einlass (4) einmündet und nahe zum Deckelelement (2) geführt ist, wobei koaxial um den Einlass (4) sich die erste Kammer (6.1) erstreckt und stirnseitig nahe im Bodenelement (2) eine Verbindung (7) koaxial um die erste Kammer (6.1) angeordnete zweite Kammer (6.2) gebildet ist, welche nahe an das Deckelelement (2) angrenzt.

6. Vorrichtung nach Anspruch 5, **dadurch gekennzeichnet, dass** stirnseitig zwischen der zweiten Kammer (6.2) und dem Deckelelement (2) eine Verbindung (7) zu einer dritten Kammer (6.3) gebildet ist, welche koaxial die zweite Kammer (6.2) umfängt, wobei eine äussere Mantelfläche (9) der dritten Kammer (6.3) flüssigkeitsdurchlässig, insbesondere lochblechartig ausgebildet ist.

7. Vorrichtung nach Anspruch 6, **dadurch gekennzeichnet, dass** die dritte Kammer (6.3) im Bereich des Bodenelememtes (3) schalenartig ausgebildet ist und an dieses der Auslass (10) zum Abführen der behandelten Flüssigkeit anschliesst.

8. Vorrichtung nach wenigstens einem der Ansprüche 1 bis 7, **dadurch gekennzeichnet, dass** die einzelnen Kammern (6.1 bis 6.3) mit Materialien, wie Aktivkohle, Basalt, Stützkies, Gletschersubstrat, Zeolith, Evazit und/oder zumindest einem Filterelement (17), insbesondere Filterwatte befüllt sind.

9. Vorrichtung nach Anspruch 8, **dadurch gekennzeichnet, dass** die Materialien, wie Aktivkohle, Basalt, Stützkies, Gletschersubstrat, Zeolith und Evazit behandelt, insbesondere bestrahlt sind.

10. Vorrichtung nach Anspruch 8 oder 9, **dadurch gekennzeichnet, dass** die erste Kammer (6.1) mit zumindest einem auswaschbaren und/oder austauschbaren Filterelement (17), ggf. ausgebildet als Filterpatrone bestückt und ggf. im Bereich des Bodenelementes (3) mit Stützkies (11) befüllt ist.

11. Vorrichtung nach wenigstens einem der Ansprüche 8 bis 10, **dadurch gekennzeichnet, dass** die zweite Kammer (6.2) im Bereich des Bodenelementes (3) mit Basalt (12), darüber liegend mit Evazit (13), darüber liegend mit Stützkies (11) und abschliessend mit Zeolith (15) befüllt ist.

12. Vorrichtung nach wenigstens einem der Ansprüche 8 bis 11, **dadurch gekennzeichnet, dass** die dritte Kammer (6.3) mit Zeolith (16) befüllt ist.

13. Vorrichtung nach wenigstens einem der Ansprüche 8 bis 12, **dadurch gekennzeichnet, dass** die Materialien, wie Aktivkohle, Basalt, Stützkies, Gletschersubstrat, Zeolith, Evazit in unterschiedlichen Körnungen und Korngrössen in den Kammern (6.1 bis 6.3) angeordnet sind.

14. Vorrichtung nach wenigstens einem der Ansprüche 1 bis 13, **dadurch gekennzeichnet, dass** der Behälter (1), insbesondere die einzelnen Kammern (6.1 bis 6.3) querschnittlich rund, quadratisch, rechteckartig, sechseckoder achteckartig ausgebildet sind.

15. Vorrichtung nach wenigstens einem der Ansprüche 1 bis 14, **dadurch gekennzeichnet, dass** das Volumen der innen liegenden Kammern (6.1 oder 6.2) kleiner oder gleich ist als ein Volumen der koaxial umschliessenden Kammern (6.2 oder 6.3).

16. Vorrichtung nach wenigstens einem der Ansprüche 1 bis 15, **dadurch gekennzeichnet, dass** ein Volumen der innen liegenden Kammern (6.1 oder 6.2) kleiner ist als ein Volumen der koaxial umgebenden Kammern (6.2 oder 6.3) und somit eine Durchströmgeschwindigkeit der Flüssigkeit von der ersten Kammer (6.1) zur nächsten Kammer (6.2 oder 6.3) durch Querschnittsvergrösserung verminderbar, insbesondere beeinflussbar ist.
